# EUROPÄISCHE PATENTANMELDUNG

(11) **EP 4 717 323 A1**
(43) Veröffentlichungstag der Anmeldung: **01.04.2026**
(21) Anmeldenummer: 24202915.5
(22) Anmeldetag: 26.09.2024
(51) Int. Cl.: A62C 3/02, B64D 1/16

(54) **VORRICHTUNG ZUM LÖSCHEN ZUMINDEST EINES BRANDES IM FREILAND, INSBESONDERE IN WALDREICHER UMGEBUNG**

(71) Anmelder: Mielke, Walter, 26721 Emden (DE)
(72) Erfinder: Mielke, Walter, 26721 Emden (DE)
(74) Vertreter: Jabbusch, Matthias

(57) **Zusammenfassung**

Bei der Vorrichtung zum Löschen zumindest eines Brandes (1) im Freiland, insbesondere im waldreicher Umgebung, umfassend wenigstens eine Einrichtung zum Einbringen (2) zumindest eines Löschmittels in den Herd des Brandes, ist vorgesehen, dass das Löschmittel ein splitterfreier Sprengkörper (5) ist. Mit dieser Vorrichtung wird das Löschen eines Brandes im Freiland, insbesondere in waldreicher Umgebung wirkungsvoll unterstützt.

## Beschreibung

Die Erfindung betrifft eine Vorrichtung zum Löschen zumindest eines Brandes im Freiland, insbesondere in waldreicher Umgebung, umfassend wenigstens eine Einrichtung zum Einbringen zumindest eines Löschmittels in den Herd des Brandes.

Immer wieder treten insbesondere in heißeren Sommermonaten großflächige Brände im Freiland auf. Diese Brände sind insbesondere Waldbrände oder Moorbrände. Das Löschen dieser Brände mit herkömmlichen Feuerwehrkraftfahrzeugen ist schwierig, da mit diesen Feuerwehrkraftfahrzeugen nicht zum Herd eines derartigen Brandes vorgedrungen werden kann. Daher sind im Stand der Technik bereits Löschflugzeuge oder auch Löschhubschrauber vorgeschlagen worden, mit denen Löschmittel oberhalb des Brandes abgelassen werden kann.

Bei dem Löschmittel handelt es sich häufig um Wasser, das zu einem Teil vor Auftreffen im Brandherd bereits aufgrund der hohen Temperaturen verdunstet. Daher ist das Löschen eines größeren Waldbrandes ein langwieriges Vorhaben, da nur wenig Löschmittel eingebracht werden kann. Es können pro Flug keine größeren Löschmittelmengen (Wasser/Schaum) transportiert werden, zudem ist deren treffsicherer Abwurf unter Beachtung strenger Sicherheitsaspekte überwiegend vom individuellen Können der Piloten bestimmt. Geschwindigkeit und Flughöhe müssen so großzügig bemessen sein, dass eine Gefährdung der fliegenden Mannschaften durch extrem hohe Flammen und Hitze ausgeschlossen ist. Die eingebrachten Wassermengen verdampfen innerhalb kürzester Zeit vor allem bei den sogenannten "Kronenbänden" mit mehrere Meter hohen Flammen und extremster Hitze weit oberhalb des Brandes, ohne eine auch nur geringe Wirkung hinterlassen zu haben.

Der Erfindung liegt daher die Aufgabe zugrunde, eine Vorrichtung aufzuzeigen, mit der ein Löschen eines Brandes im Freiland, insbesondere in waldreicher Umgebung wirkungsvoll unterstützt wird.

Diese Aufgabe ist erfindungsgemäß dadurch gelöst, dass das Löschmittel ein splitterfreier Sprengkörper ist.

Das Einbringen eines derartigen Sprengkörpers in den Herd eines Brandes kann zu einer Detonation des Sprengkörpers führen. Diese Detonation bzw. Explosion erzeugt eine Druckwelle, mit der Flammen ausgeblasen werden.

Die erfindungsgemäße Vorrichtung bringt also kein flüssiges Löschmittel in den Herd des Brandes, sondern einen Sprengkörper. Ist die Detonation ausgelöst worden, sind die großen, beispielsweise von Bäumen genährten Flammen ausgelöscht. Verbleibende kleinere Glutnester können dann mit konventionellen Feuerlöscheinheiten bekämpft werden. Bezüglich der erfolgten Detonation und der nachfolgenden Druckwelle ist es von Bedeutung, dass in diesem Wirkungsbereich sofort sämtliche Tiere getötet und somit von qualvollem Leid erlöst werden, die bereits mehr oder wenigster schwer verletzt keine Chance auf ein Entkommen oder Überleben haben.

Der erfindungsgemäß vorgesehene splitterfreie Sprengkörper kann so dimensioniert sein, dass die von ihm erzeugte Druckwelle an den konkret vorliegenden Brand im Freiland angepasst ist. Dabei kann der Sprengkörper beispielsweise die Größenausbildung eines Fußballs haben, so dass er insofern gut handhabbar ist.

Ein derartiger Sprengkörper kann beispielsweise mit Hilfe eines Geschützes eingebracht werden. Gerade militärische Geschütze können Sprengkörper mit hoher Präzision zu bestimmten Punkten und somit auch in den Herd eines Brandes einbringen.

Der Sprengkörper kann aber auch an einem Marschflugkörper befestigt sein, der den Sprengkörper in den Herd des Brandes einbringt.

Es können aber auch, wie im Stand der Technik, Flugzeuge, Drohnen oder andere Luftfahrzeuge eingesetzt werden, um den Sprengkörper in einen Bereich oberhalb des Brandherdes zu bringen. Nach einem Auslösen des Sprengkörpers aus zum Beispiel einem Flugzeug und einer Scharfstellung des Sprengkörpers kann sich das Luftfahrzeug entfernen, bevor dann im Brandherd die Druckwelle ausgelöst wird.

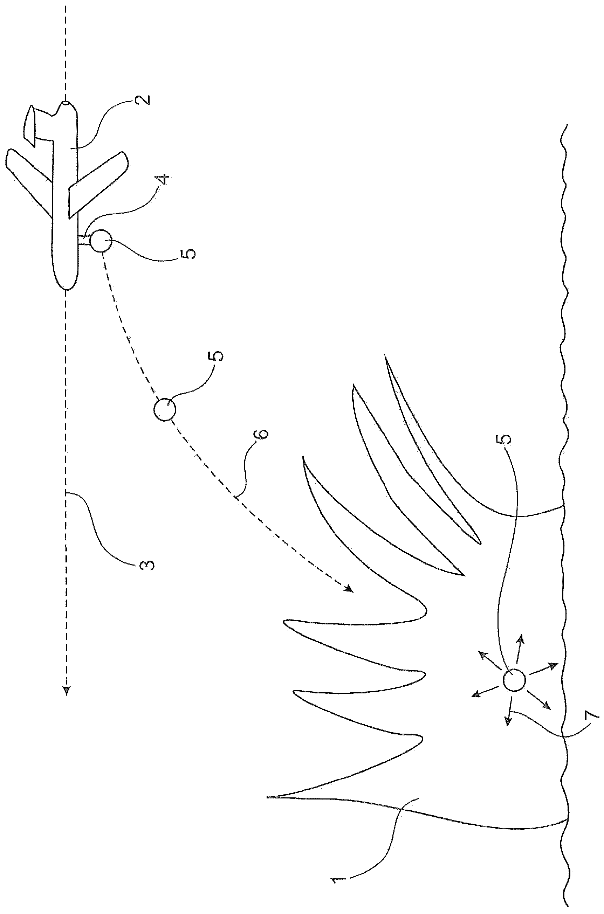

Ein Ausführungsbeispiel der Erfindung ist in der Zeichnung dargestellt. Die einzige Figur der Zeichnung zeigt in schematischer Seitenansicht einen Großbrand 1 im Freiland. Im Luftraum etwa oberhalb des Großbrandes 1 befindet sich ein Flugzeug 2 auf seiner im Wesentlichen geraden mit dem Pfeil 3 verdeutlichten Flugbahn.

Das Flugzeug 2 trägt über eine Ausklinkungseinrichtung 4 einen splitterfreien Sprengkörper 5. Die Figur zeigt auch die Lage des Sprengkörpers 5 nach einem Ausklinken. Dieser Sprengkörper 5 befindet sich auf einer parabelförmigen Fallkurve, die mit dem Pfeil 6 dargestellt ist. In weiterer Darstellung ist der Sprengkörper 5 in den Großbrand 1 eingebracht, wo er detoniert. Dabei entsteht, wie mit den Pfeilen 7 verdeutlicht, eine Druckwelle. Diese Druckwelle bläst den Großbrand 1 aus.

## Patentansprüche

1. Vorrichtung zum Löschen zumindest eines Brandes im Freiland, insbesondere in waldreicher Umgebung, umfassend wenigstens eine Einrichtung zum Einbringen zumindest eines Löschmittels in den Herd des Brandes,
**dadurch gekennzeichnet,**
**dass** das Löschmittel ein splitterfreier Sprengkörper (5) ist.

2. Vorrichtung nach Anspruch 1, **dadurch gekennzeichnet, dass** der Sprengkörper (5) die Größenausbildung eines Fußballs hat.

3. Vorrichtung nach Anspruch 1 oder 2, **dadurch gekennzeichnet, dass** die Einrichtung zum Einbringen ein Geschütz ist.

4. Vorrichtung nach Anspruch 1 oder 2, **dadurch gekennzeichnet, dass** die Einrichtung zum Einbringen ein Marschflugkörper ist.

5. Vorrichtung nach Anspruch 1 oder 2, **dadurch gekennzeichnet, dass** die Einrichtung zum Einbringen ein Flugzeug (2) , eine Drohne oder ein anderes Luftfahrzeug ist.
